# EUROPEAN PATENT SPECIFICATION

(11) **EP 4 328 510 B1**
(45) Date of publication and mention of the grant of the patent: **04.11.2026**
(21) Application number: 22862604.0
(22) Date of filing: 25.03.2022
(51) Int. Cl.: F24F 11/42, F24F 11/41, F24F 11/65, F24F 11/79, F24F 110/10

(54) **DEFROST CONTROL METHOD AND DEVICE FOR MULTI-SPLIT SYSTEM**
ABTAUSTEUERUNGSVERFAHREN UND -VORRICHTUNG FÜR MULTISPLIT-SYSTEM
PROCÉDÉ ET DISPOSITIF DE COMMANDE DE DÉGIVRAGE POUR SYSTÈME MULTI-BLOCS

(30) Priority: 02.09.2021 CN 202111028336
(43) Date of publication of application: 28.02.2024
(73) Proprietor: GD Midea Heating & Ventilating Equipment Co., Ltd., Foshan, Guangdong 528311 (CN); HEFEI MIDEA HEATING & VENTILATING EQUIPMENT CO., LTD., Boyan Science Park, High-Tech Zone, Hefei Anhui 230088 (CN)
(72) Inventor: MA, Xihua, Foshan, Guangdong 528311 (CN); WANG, Mingren, Foshan, Guangdong 528311 (CN); WANG, Xinli, Foshan, Guangdong 528311 (CN); LIANG, Xin, Foshan, Guangdong 528311 (CN); HUANG, Jinyuan, Foshan, Guangdong 528311 (CN)
(74) Representative: RGTH
(86) International application number: PCT/CN2022/083159
(87) International publication number: WO 2023/029457

(56) References cited:
- CN-A- 106 765 688
- CN-A- 109 458 699
- CN-A- 110 500 713
- CN-A- 110 553 346
- CN-A- 110 671 743
- CN-A- 110 926 072
- CN-A- 111 765 595
- CN-A- 112 212 467
- CN-U- 204 187 886

## Description

### FIELD

The present invention relates to the field of a multi-split control technology, particularly relates to a defrosting control method and device for a multi-split system.

### BACKGROUND

Currently, an outdoor unit heat exchanger will frost when serving as an evaporator in a multi-split system under outdoor low-temperature environment. With a thickening frost layer, the outdoor unit heat exchanger is of a gradually-reducing capacity of absorbing heat from the outside, thus adversely affecting heating performance. As such, defrosting is required to restore heat exchange performance of the outdoor unit heat exchanger.

In the related art, an indoor unit heat exchanger is switched to serve as the evaporator, and the outdoor unit heat exchanger is switched to serve as a condenser, such that heat absorbed from the indoors, together with the heat provided by a compressor, is provided to the outdoor unit heat exchanger for melting the frost layer thereon, thus achieving defrosting. However, switching the indoor unit heat exchanger to serve as the evaporator will cause the indoor unit to stop heating, thus leading to fluctuations in the indoor temperature.

Therefore, it is an urgent technical problem that needs to be solved on how to defrost the outdoor unit heat exchanger without affecting the indoor temperature.

CN 110 926 072 A discloses a multi-split air conditioner system, a defrosting control method thereof, a control device and a storage medium. The method comprises the steps that defrosting instructions are received; a four-way valve of the multi-split air conditioner system is controlled, a refrigerant compressed through a compressor is subjected to flow dividing into two parts, one part of the refrigerant sequentially passes through a first indoor heat exchanger and a second indoor heat exchanger and then returns to the compressor, and the other part of the refrigerant sequentially passes through an outdoor heat exchanger and a second indoor heat exchanger and then returns to the compressor; and before the defrosting instructions are received, an indoor unit in a heating state is a first indoor unit, a heat exchanger of the first indoor unit is the first indoor heat exchanger, and before the defrosting instructions are received, an indoor unit in a refrigeration state is a second indoor unit, and a heat exchanger of the second indoor unit is the second indoor heat exchanger.

### SUMMARY

The present disclosure aims to solve at least one of the technical problems in the related art to a certain degree.

In view of the above, the present disclosure proposes a defrosting control method and device for a multi-split system, which achieves defrosting an outdoor unit heat exchanger while maintaining continuous heating of a heating indoor unit.

In a first aspect, the present disclosure provides in embodiments a defrosting control method for a multi-split system, the method comprising: judging whether a heat-absorbing and defrosting capacity of a cooling indoor unit in operation is greater than or equal to a preset value, in response to the multi-split system meeting a defrosting condition, wherein the multi-split system comprises at least one heating indoor unit, at least one cooling indoor unit, and at least one outdoor unit; and in response to the heat-absorbing and defrosting capacity of the cooling indoor unit in operation being greater than or equal to the preset value, controlling an outdoor unit heat exchanger to switch from serving as an evaporator to a condenser; enabling a refrigerant to recover heat absorbed by the cooling indoor unit; and providing the heat to the outdoor unit heat exchanger to defrost and to a heating indoor unit heat exchanger to heat respectively.

According to the invention, the method further comprises: in response to the heat-absorbing and defrosting capacity of the cooling indoor unit in operation being lower than the preset value, controlling the outdoor unit heat exchanger to switch from serving as the evaporator to the condenser; controlling a heat storage electronic expansion valve to turn on; enabling the refrigerant to absorb heat from a heat storage module, and providing the heat to the outdoor unit heat exchanger to defrost and to the heating indoor unit heat exchanger to heat respectively.

In some embodiments, after the multi-split system finishes defrosting, the method further comprises: controlling the outdoor unit heat exchanger to switch from serving as the condenser to the evaporator; absorbing heat by the outdoor unit heat exchanger from outdoor environment, and absorbing heat by the cooling indoor unit in operation; and providing both the heat absorbed by the outdoor unit heat exchanger and the heat absorbed by the cooling indoor unit in operation to the heating indoor unit heat exchanger to heat.

In some embodiments, the method further comprises: controlling the heat storage electronic expansion valve to turn off after the multi-split system finishes defrosting, and enabling the refrigerant to stop absorbing heat from the heat storage module.

In some embodiments, the method further comprises: controlling the heat storage module to store heat in response to the multi-split system meeting a heat storage condition during normal operation, wherein the heat storage condition comprises an environment temperature being lower than a critical temperature value and/or the cooling indoor unit having an insufficient heat-absorbing and defrosting capacity.

In a second aspect, the present disclosure provides in embodiments a defrosting control device for a multi-split system, the device comprising: a first judging unit, configured to judge whether a heat-absorbing and defrosting capacity of a cooling indoor unit in operation is greater than or equal to a preset value, in response to the multi-split system meeting a defrosting condition, wherein the multi-split system comprises at least one heating indoor unit, at least one cooling indoor unit, and at least one outdoor unit; and a first control unit, configured to: in response to the heat-absorbing and defrosting capacity of the cooling indoor unit in operation being greater than or equal to the preset value, control an outdoor unit heat exchanger to switch from serving as an evaporator to a condenser; enable a refrigerant to recover heat absorbed by the cooling indoor unit; and provide the heat to the outdoor unit heat exchanger to defrost and to a heating indoor unit heat exchanger to heat respectively.

According to the invention, the device further comprises: a second control unit, configured to: in response to the heat-absorbing and defrosting capacity of the cooling indoor unit in operation being lower than the preset value, control the outdoor unit heat exchanger to switch from serving as the evaporator to the condenser; control a heat storage electronic expansion valve to turn on; enable the refrigerant to absorb heat from a heat storage module; and provide the heat to the outdoor unit heat exchanger defrost and to the heating indoor unit heat exchanger to heat respectively.

In some embodiments, the device further comprises: a third control unit, configured to: after the multi-split system finishes defrosting, control the outdoor unit heat exchanger to switch from serving as the condenser to the evaporator; absorb heat by the outdoor unit heat exchanger from outdoor environment, and absorb heat by the cooling indoor unit in operation; and provide both the heat absorbed by the outdoor unit heat exchanger and the heat absorbed by the cooling indoor unit in operation to the heating indoor unit heat exchanger toheat.

In a third aspect, the present disclosure provides in embodiments a multi-split system, comprising: a defrosting control device for a multi-split system as described in the above embodiments.

In a fourth aspect, the present disclosure provides in embodiments a multi-split system, comprising: an outdoor unit, and an indoor unit connected to the outdoor unit, wherein the outdoor unit comprises a compressor, and an outdoor unit heat exchanger; the indoor unit comprises at least one heating indoor unit heat exchanger and at least one cooling indoor unit heat exchanger connected in parallel; a pipeline connecting the indoor unit and the outdoor unit is provided with a switching valve, wherein the switching valve: switches in response to the multi-split system meeting a defrosting condition and a heat-absorbing and defrosting capacity of the cooling indoor unit heat exchanger in operation being greater than or equal to a preset value; enabling the outdoor unit heat exchanger to switch to serve as a condenser; and recovering heat defrost, wherein recovered heat is absorbed by the cooling indoor unit heat exchanger which serves as an evaporator.

According to the invention, the outdoor unit further comprises: a heat storage module connected to the outdoor unit heat exchanger, wherein a pipeline connecting the outdoor unit heat exchanger and the heat storage module is provided with a valve, wherein the valve: turns on in response to the heat-absorbing and defrosting capacity of the cooling indoor unit heat exchanger in operation being lower than the preset value; enabling the outdoor unit heat exchanger to absorb heat to defrost from the heat storage module which has stored heat in advance.

In some embodiments, the switching valve further: switches again after the multi-split system finishes defrosting; enabling the outdoor unit heat exchanger to switch from serving as the condenser to the evaporator, to absorb heat from outdoor environment; and provide the heat to the heating indoor unit heat exchanger to heat.

In some embodiments, the valve further turns off after the multi-split system finishes defrosting, wherein the valve further: turns on in response to the multi-split system meeting a heat storage condition during normal operation; enabling the heat storage module to store heat, wherein the heat storage condition comprises an environment temperature being lower than a critical temperature value and/or the cooling indoor unit having an insufficient heat-absorbing and defrosting capacity.

In a fifth aspect, the present disclosure provides in embodiments a computer device, comprising: at least one processor; and a memory communicated with the at least one processor, wherein the memory stores an instruction executable by the at least one processor, wherein the instruction when executed by the at least one processor achieves the method as described in embodiments of the first aspect.

In a sixth aspect, the present disclosure provides in embodiments a non-transient computer-readable storage medium having stored therein a computer instruction that when executed by a computer achieves the method as described in embodiments of the first aspect.

According to embodiments of the present disclosure, the technical solution may achieve the following advantages.

It is judged whether the heat-absorbing and defrosting capacity of the cooling indoor unit in operation is greater than or equal to the preset value, in response to the multi-split system meeting the defrosting condition; and in response to the heat-absorbing and defrosting capacity of the cooling indoor unit in operation being greater than or equal to the preset value, the outdoor unit heat exchanger is controlled to switch from serving as the evaporator to the condenser; the refrigerant is enabled to recover heat absorbed by the cooling indoor unit; and the heat is provided to the outdoor unit heat exchanger for defrosting and to the heating indoor unit heat exchanger for heating respectively. Therefore, the heating indoor unit heat exchanger serves as the condenser during defrosting the outdoor unit, thus avoiding the temperature in the heating room where the heating indoor unit is located from large fluctuation. Accordingly, the multi-split system achieves defrosting the outdoor unit heat exchanger while maintaining the temperature in the heating room where the heating indoor unit is located from large fluctuation.

It should be understood that the content described in this section is not intended to identify any key or important feature of the embodiments of the present disclosure, nor to limit the scope of the present disclosure. Other features of the present disclosure will be easily understood through the following description.

### BRIEF DESCRIPTION OF THE DRAWINGS

The accompanying drawings are for better understanding of the present disclosure, and do not constitute restriction on the present disclosure, in which:
Figure 1 is a block diagram showing a multi-split system provided in embodiments of the present disclosure.
Figure 2 is a flow chart showing a defrosting control method for a multi-split system provided in embodiments of the present disclosure.
Figure 3 is a schematic diagram showing a multi-split system provided in embodiments of the present disclosure.
Figure 4 is a schematic diagram showing a multi-split system in normal operation provided in embodiments of the present disclosure.
Figure 5 is a schematic diagram showing a multi-split system operating under a first defrosting mode provided in embodiments of the present disclosure.
Figure 6 is a schematic diagram showing a multi-split system operating under a second defrosting mode provided in embodiments of the present disclosure.
Figure 7 is a block diagram showing a defrosting control device for a multi-split system provided in embodiments of the present disclosure.
Figure 8 is a block diagram showing a defrosting control device for a multi-split system provided in embodiments of the present disclosure.
Figure 9 is a schematic diagram showing a multi-split system provided in embodiments of the present disclosure.
Figure 10 is a block diagram showing a computer device for use in implementing a defrosting control method for a multi-split system provided in embodiments of the present disclosure.

### DETAILED DESCRIPTION

Reference will be made in details to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

A defrosting control method and device for a multi-split system, as well as a computer device and a storage medium in embodiments of the present disclosure are described below in combination with the drawings.

Currently, an outdoor unit heat exchanger will frost when serving as an evaporator in a multi-split system under outdoor low-temperature environment. With a thickening frost layer, the outdoor unit heat exchanger is of a gradually-reducing capacity of absorbing heat from outside environment, thus adversely affecting heating of an indoor unit, leading to reduced heating performance of the multi-split system. As such, defrosting is required to restore heat exchange performance of the outdoor unit heat exchanger.

In the related art, when defrosting, an indoor unit heat exchanger is switched from serving as a condenser to an evaporator, while the outdoor unit heat exchanger is switched from serving as the evaporator to the condenser, such that heat absorbed by the indoor unit from the indoors, together with the heat provided by a compressor, is provided to the outdoor unit heat exchanger for melting the frost layer thereon, which however will cause the indoor unit to stop heating, thus leading to fluctuations in the indoor temperature.

In view of the above, the present disclosure provides in embodiments a defrosting control method for a multi-split system, which is capable of defrosting the outdoor unit heat exchanger without affecting the indoor temperature.

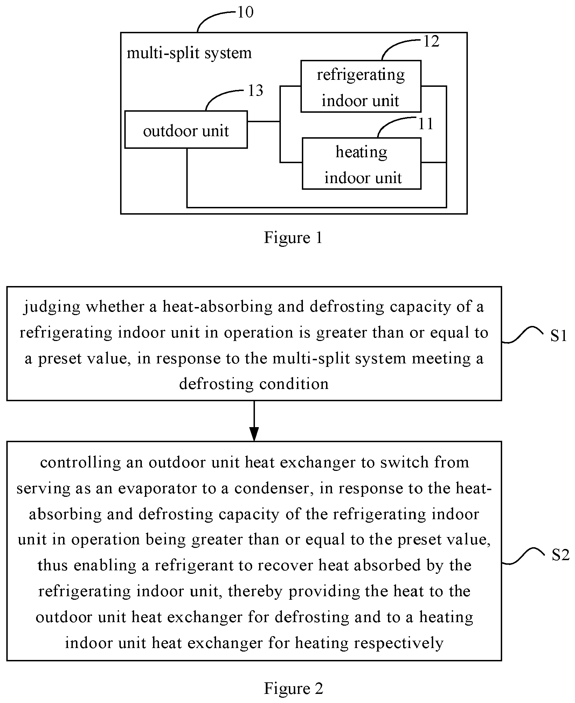

The multi-split system provided in embodiments of the present disclosure is described at first. Figure 1 is a block diagram showing a multi-split system provided in embodiments of the present disclosure.

As shown in Figure 1, the multi-split system 10 provided in embodiments of the present disclosure comprises at least one heating indoor unit 11, at least one cooling indoor unit 12, and at least one outdoor unit 13.

When the outdoor unit 13 is placed in the outdoor low-temperature environment, the outdoor unit 13 heat exchanger serves as the evaporator for the multi-split system 10, absorbing heat from outdoor environment, and transferring the heat to the heating indoor unit 11 for heating the indoors. The heating indoor unit 11 and the cooling indoor unit 12 may be separate indoor units in different rooms, i.e., placed in different rooms, and may be in operation at the same time. For example, the cooling indoor unit 12 may be an indoor unit placed in a refrigerating room in need of maintaining a room temperature at a low temperature, such as a machine room and a fitness room, where this indoor unit is operated under a refrigerating mode for maintaining the room temperature at the low temperature, and in this circumstance, the cooling indoor unit 12 heat exchanger serves as the evaporator for the multi-split system 10; while the heating indoor unit 11 may be another indoor unit placed in a normal room or a heating room in need of maintaining the room temperature at a high temperature, where this another indoor unit is operated under a heating mode for maintaining the room temperature at the high temperature, and in this circumstance, the heating indoor unit 11 heat exchanger serves as the condenser for the multi-split system 10.

On the basis of the multi-split system 10 provided in embodiments of the present disclosure, in specific, Figure 2 is a flow chart showing a defrosting control method for the multi-split system 10 provided in embodiments of the present disclosure.

As shown in Figure 2, the defrosting control method for the multi-split system 10, provided in embodiments of the present disclosure, comprises but not limited to the following steps S1 and S2.

At S1, in response to the multi-split system 10 meeting a defrosting condition, it is judged whether a heat-absorbing and defrosting capacity of the cooling indoor unit 12 in operation is greater than or equal to a preset value.

In embodiments of the present disclosure, it may be judged whether the multi-split system meets the defrosting condition, by means of monitoring information on heat absorbed from outdoor environment by the outdoor unit 13 heat exchanger, or monitoring the heating performance of the heating indoor unit 11.

In some embodiments, the multi-split system 10 meeting the defrosting condition, for example, may refer to, but not limited to: the compressor operating for an accumulative period and for a consecutive period exceeding respective preset periods; a coil temperature being lower than a particular temperature for a particular period; and the like. For example, the compressor operates for the accumulative period exceeding 3 hours and for the consecutive period exceeding 20 minutes; and the coil temperature is lower than 16 °C for 5 minutes. Alternatively, the compressor operates for the accumulative period exceeding 45 minutes and for the consecutive period exceeding 20 minutes; and the coil temperature is lower than16 °C for 5 minutes; and the like.

It would be understood that based on the multi-split system 10 provided in embodiments of the present disclosure, it is judged whether the heat-absorbing and defrosting capacity of the cooling indoor unit 12 in operation is greater than or equal to the preset value; and the multi-split system 10 is controlled according to the heat-absorbing and defrosting capacity of the cooling indoor unit 12.

In embodiments of the present disclosure, the multi-split system 10 meeting the defrosting condition indicates that the outdoor unit 13 heat exchanger requires defrosting, it is then judged whether the heat-absorbing and defrosting capacity of the cooling indoor unit 12 in operation is greater than or equal to the preset value.

It would be understood that the cooling indoor unit 12 may be in operation or out of operation. In embodiments of the present disclosure, the heat-absorbing and defrosting capacity of the cooling indoor unit 12 in operation may be, but not limited to, an absolute value acquired according to rated power consumption and other related parameters or by real-time measurement, for example, calculating according to the rated power consumption and other related parameters or measuring in real time, to determine an amount of heat absorbed from the refrigerating room per unit time by the cooling indoor unit 12 in operation. Alternatively, the heat-absorbing and defrosting capacity of the cooling indoor unit 12 in operation may also be a relative value, for example, a value per unit time of the heat absorbed by the cooling indoor unit 12 in operation in relative to heat required for heating of the heating indoor unit 11 and/or heat required for defrosting the outdoor unit 13.

It should be noted that in embodiments of the present disclosure, the heat-absorbing and defrosting capacity of the cooling indoor unit 12 in operation is acquired for determine a relationship of the heat absorbed by the cooling indoor unit 12 in operation as compared to the heat required for heating of the heating indoor unit 11 in operation and the heat required for defrosting the outdoor unit 13 in operation, which may be set as required in the premise that the heat-absorbing and defrosting effect is achieved, and not particular limited here.

In an illustrative embodiment, the heat-absorbing and defrosting capacity N of the cooling indoor unit 12 is represented as: $N = {\sum }_{l}^{n} {A}_{n} f \left(X\right) ,$ where n is the number of the cooling indoor units 12; *A*ₙ is a basic value corresponding to a capacity of the n^{th} cooling indoor unit 12; *f*(*X*) is a table value, which is related to the indoor temperature *T*ₙ at which the cooling indoor unit 12 is and the fan gear at which the cooling indoor unit 12 is operated.

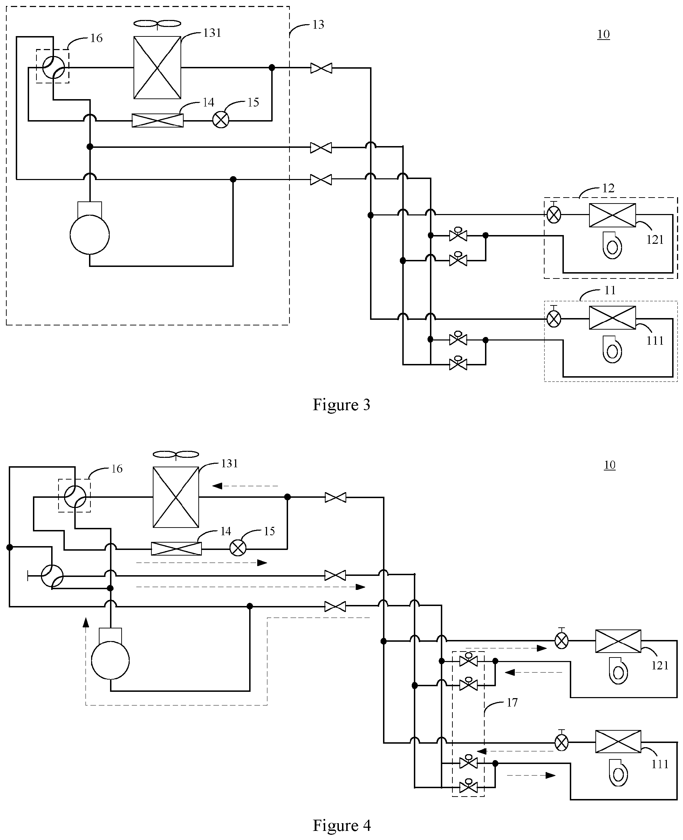

In some embodiments, as shown in Figure 3, the multi-split system 10 provided in embodiments of the present disclosure further comprises: a heat storage module 14, a heat storage electronic expansion valve 15, and a four-way valve 16; the outdoor unit 13 comprises an outdoor unit heat exchanger 131; the heating indoor unit 11 comprises a heating indoor unit heat exchanger 111; and the cooling indoor unit 12 comprises a cooling indoor unit heat exchanger 121.

In response to the heat-absorbing and defrosting capacity of the cooling indoor unit 12 in operation being lower than the preset value, the four-way valve 16 is switched; the outdoor unit heat exchanger 131 is controlled to switch from serving as the evaporator to the condenser; and the heat storage electronic expansion valve 15 is controlled to turn on; a refrigerant absorbs heat from the heat storage module 14 which has stored some heat in advance; and the heat is provided to the outdoor unit heat exchanger 131 for defrosting and to the heating indoor unit heat exchanger 111 for heating respectively, thereby avoiding the temperature in the heating room where the heating indoor unit 11 is located from fluctuation or failed defrosting of the outdoor unit 13.

It would be understood that, in embodiments of the present disclosure, the heat storage module 14 has stored some heat, wherein these heat stored in the heat storage module 14 may be stored during normal operation of the multi-split system 10; and/or heat is stored in the heat storage module 14 during heating of the heating indoor unit 11 and defrosting the outdoor unit 13 with the heat absorbed by the cooling indoor unit 12.

At this time, the cooling indoor unit heat exchanger 121 in operation serves as the evaporator, providing continuous refrigeration for the refrigerating room.

At S2, in response to the heat-absorbing and defrosting capacity of the cooling indoor unit 12 in operation being greater than or equal to the preset value, the outdoor unit heat exchanger 131 is controlled to switch from severing as the evaporator to the condenser; a refrigerant is enabled to recover heat absorbed by the cooling indoor unit 12; and the heat is provided to the outdoor unit heat exchanger 131 for defrosting and to the heating indoor unit heat exchanger 111 for heating respectively.

It would be understood that the heat-absorbing and defrosting capacity of the cooling indoor unit 12 in operation being greater than or equal to the preset value, i.e., the heat absorbed from the refrigerating room by the cooling indoor unit 12 being greater than or equal to a sum of the heat required for heating of the heating indoor unit 11 in operation and the heat required for defrosting the outdoor unit 13 in operation, indicates sufficient heat for heating of the heating indoor unit 11 and defrosting the outdoor unit 13 both.

In view of the above, in embodiments of the present disclosure, the outdoor unit heat exchanger 131 is controlled to switch from serving as the evaporator to the condenser for defrosting; the heating indoor unit heat exchanger 111 is controlled to serve as the condenser; the refrigerant is enabled to recover the heat absorbed by the cooling indoor unit 12; and the heat is provided to the outdoor unit heat exchanger 131 for defrosting and to the heating indoor unit heat exchanger 111 for heating respectively.

According to embodiments of the present disclosure, the defrosting control method for the multi-split system, in response to the multi-split system 10 meeting the defrosting condition, judges whether the heat-absorbing and defrosting capacity of the cooling indoor unit 12 in operation is greater than or equal to the preset value; and in response to the heat-absorbing and defrosting capacity of the cooling indoor unit 12 in operation being greater than or equal to the preset value, controls the outdoor unit heat exchanger 131 to switch from serving as the evaporator to the condenser; enables the refrigerant to recover the heat absorbed by the cooling indoor unit 12; and provides the heat to the outdoor unit heat exchanger 131 for defrosting and to the heating indoor unit heat exchanger 111 for heating respectively. Therefore, the heating indoor unit heat exchanger 111 serves as the condenser during defrosting the outdoor unit 13, thus avoiding the temperature in the heating room where the heating indoor unit 11 is located from large fluctuation. Accordingly, the multi-split system 10 achieves defrosting the outdoor unit 13 heat exchanger while maintaining the temperature in the heating room where the heating indoor unit 11 is located from large fluctuation.

It should be noted that it is judged whether the heat-absorbing and defrosting capacity of the cooling indoor unit 12 in operation is greater than or equal to the preset value in response to the multi-split system 10 meeting the defrosting condition; and the defrosting is controlled according to the judged result; while the heat-absorbing and defrosting capacity of the cooling indoor unit 12 is related to the indoor temperature at which the cooling indoor unit 12 is and a fan gear at which the cooling indoor unit 12 is operated. There is still another possibility of the heat-absorbing and defrosting capacity of the cooling indoor unit 12 in operation being lower than the preset value due to changes in the indoor temperature at which the cooling indoor unit 12 is and the fan gear at which the cooling indoor unit 12 is operated during the cooling indoor unit 12 in operation absorbing and providing the heat to the outdoor unit heat exchanger 131 for defrosting and to the heating indoor unit heat exchanger 111 for heating respectively.

In view of the above, in some embodiments of the present disclosure, in response to the heat-absorbing and defrosting capacity of the cooling indoor unit 12 in operation being lower than the preset value, the outdoor unit heat exchanger 131 is controlled to switch from serving as the evaporator to the condenser; the heat storage electronic expansion valve 15 is controlled to turn on; the refrigerant is enabled to absorb heat from the heat storage module 14 which has stored some heat in advance; and the heat is then provided to the outdoor unit heat exchanger 131 for defrosting and to the heating indoor unit heat exchanger 111 for heating respectively.

It would be understood that the heat-absorbing and defrosting capacity of the cooling indoor unit 12 in operation being lower than the preset value, i.e., the heat absorbed from the refrigerating room by the cooling indoor unit 12 being less than the sum of the heat required for heating of the heating indoor unit 11 in operation and the heat required for defrosting the outdoor unit 13 in operation, indicates insufficient heat absorbed from the refrigerating room by the cooling indoor unit 12 for heating of the heating indoor unit 11 and defrosting the outdoor unit 13 both.

In this circumstance, without supplementary heat for heating of the heating indoor unit 11 and for defrosting the outdoor unit 13, it will cause failure in defrosting the outdoor unit 13 or in heating of the heating indoor unit 11, leading to fluctuated temperature in the heating room where the heating indoor unit 11 is located.

In some embodiments, after the multi-split system 10 finishes defrosting, the outdoor unit heat exchanger 131 is controlled to switch from serving as the condenser to the evaporator; heat is absorbed by the outdoor unit heat exchanger 131 from outdoor environment, and heat is absorbed by the cooling indoor unit 12 in operation; and both the heat absorbed by the outdoor unit heat exchanger 131 and the heat absorbed by the cooling indoor unit 12 in operation are provided to the heating indoor unit heat exchanger 111 for heating.

After the multi-split system 10 finishes defrosting and switches to normal operation, the outdoor unit heat exchanger 131 is required to switch to serve as the evaporator, accordingly the outdoor unit heat exchanger 131 is controlled to switch from serving as the condenser to the evaporator by switching the four-way valve 16; and heat is provided to the heating indoor unit 11 for heating.

In some embodiments, after the multi-split system 10 finishes defrosting and switches to the normal operation, the heat absorbed by the cooling indoor unit 12 in operation may be provided to the heating indoor unit heat exchanger 111 for heating, in which circumstance, the heat acquired from the outdoor unit 13 for heating of the heating indoor unit 11 is reduced, thereby saving resources. Further, as the result of reduced heat acquired from outdoor environment by the outdoor unit 13, the outdoor unit heat exchanger 131 is constrained at a reduced speed of frosting, and even prevented from frosting.

In some embodiments, after the multi-split system 10 finishes defrosting, the heat storage electronic expansion valve 15 is controlled to turn off, the refrigerant is enabled to stop absorbing heat from the heat storage module 14.

It would be understood that the multi-split system 10 will be switched to the normal operation after defrosting, where the outdoor unit heat exchanger 131 is controlled to switch from serving as the condenser to the evaporator, providing heat to the heating indoor unit 11 for heating, in the circumstance of which heat absorption from the heat storage module 14 is no longer needed. In view of this, in embodiments of the present disclosure, after the multi-split system 10 finishes defrosting, the heat storage electronic expansion valve 15 is controlled to turn off, the refrigerant is enabled to stop absorbing heat from the heat storage module 14, thereby avoiding the heat storage module 14 from losing heat that has been stored, and thus preventing waste of resources.

In some embodiments, in response to the multi-split system 10 meeting a heat storage condition during the normal operation, the heat storage module 14 is controlled to store heat, where the heat storage condition comprises an environment temperature being lower than a critical temperature value and/or the cooling indoor unit having an insufficient heat-absorbing and defrosting capacity.

By judging the environment temperature at which the outdoor unit 13 is, in response to the environment temperature being lower than the critical temperature value, the heat storage electronic expansion valve 15 is controlled to turn on, enabling the heat storage module 14 to store heat.

In some embodiments of the present disclosure, the heat storage module 14 stores some heat; and the heat stored in the heat storage module 14 may be stored during the normal operation of the multi-split system 10.

In the case that the environment temperature at which the outdoor unit 13 is is lower than the critical temperature value, the outdoor unit heat exchanger 131 will frost. It would be understood that defrosting the outdoor unit heat exchanger 131 may be required thereafter. In embodiments of the present disclosure, it is measured whether the environment temperature at which the outdoor unit 13 is is lower than the critical temperature value, it is detected of the condition on whether the outdoor unit heat exchanger 131 needs to be defrosted thereafter; in response to the environment temperature being lower than the critical temperature value, the heat storage electronic expansion valve 15 is controlled to turn on; the heat storage module 14 is enabled to store heat, thereby ensuring that the heat storage module 14 has stored some heat when the outdoor unit heat exchanger 131 needs to be defrosted thereafter, so as to meeting requirement to defrosting of the multi-split system 10.

The critical temperature value is related to frosting that may occur for the outdoor unit heat exchanger 131, and may be determined as desired by those skilled in the art but not particular limited in the present disclosure.

In some embodiments, the heating indoor unit 11 may also be another apparatus providing heat to medium (air and water), such as a radiator, a hydraulic module, etc.

The defrosting control method for the multi-split system 10 in embodiments of the present disclosure is illustrated below.

Normal operation: as shown in Figure 4, the outdoor unit heat exchanger 131 serves as the evaporator, absorbing heat from outdoor environment; the cooling indoor unit heat exchanger 121 serves as the evaporator, absorbing heat from the refrigerating room; the refrigerant flow-direction switching device 17 is adjusted to enable the refrigerant to recover the heat absorbed by the cooling indoor unit heat exchanger 121 and receive the heat absorbed by the outdoor unit heat exchanger 131, both of which heat are provided to the heating indoor unit heat exchanger 111 which serves as the condenser for heating; and in response to the multi-split system meeting the heat storage condition, the heat storage electronic expansion valve 15 is controlled to turn on; and the heat storage module 14 is enabled to store heat.

During the normal operation of the multi-split system 10, the heat storage condition may be: the environment temperature at which the outdoor unit 13 is being lower than the critical temperature value, under which circumstance the heat storage electronic expansion valve 15 is controlled to turn on, and the heat storage module 14 is enabled to store heat.

It should be noted that Figure 4 only shows the multi-split system 10 in the normal operation where the heat storage electronic expansion valve 15 is turned on and the heat storage module 14 is enabled to store heat; while in response to the multi-split system 10 not meeting the heat storage condition during the normal operation, the heat storage electronic expansion valve 15 is turned off, and the heat storage module is disenabled to store heat or provide heat.

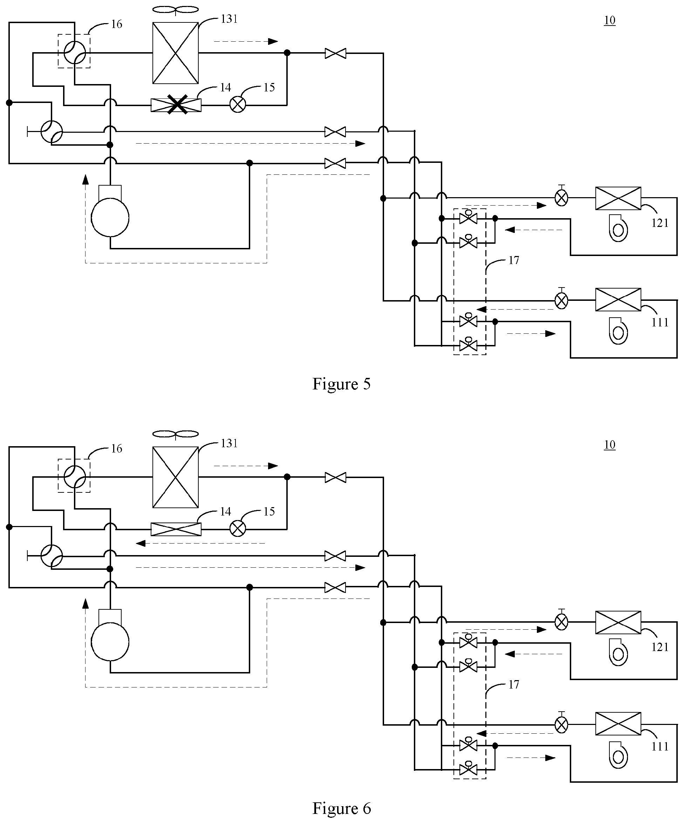

First defrosting mode, as shown in Figure 5, the cooling indoor unit heat exchanger 121 serves as the evaporator, absorbing heat from the refrigerating room; the heating indoor unit heat exchanger 111 serves as the condenser, heating the heating room; and the outdoor unit heat exchanger 131 is controlled to switch from serving as the evaporator to the condenser.

At this time, the heat-absorbing and defrosting capacity of the cooling indoor unit 12 in operation is greater than or equal to the preset value; the heat absorbed from the refrigerating room by the cooling indoor unit 12 is greater than or equal to the sum of the heat required for heating of the heating indoor unit 11 in operation and the heat required for defrosting the outdoor unit 13 in operation; and the refrigerant flow-direction switching device 17 is adjusted to enable the refrigerant to recover the heat absorbed by the cooling indoor unit 12, to provide the heat to the outdoor unit 13 heat exchanger for defrosting and to the heating indoor unit 11 heat exchanger for heating respectively.

At this time, the heat storage electronic expansion valve 15 is turned off, and the heat storage module 14 is disenabled to store heat or provide heat.

Second defrosting mode: as shown in Figure 6, the heating indoor unit heat exchanger 111 serves as the condenser, for heating the heating room; the outdoor unit heat exchanger 131 is controlled to switch from serving as the evaporator to the condenser; the heat storage electronic expansion valve 15 is controlled to turn on; the refrigerant is enabled to absorb heat from the heat storage module 14; and the heat is provided to the outdoor unit heat exchanger 131 for defrosting and to the heating indoor unit heat exchanger 111 for heating respectively.

The heat storage electronic expansion valve 15 is turned on, and the heat storage module 14 is enabled to store heat and/or provide heat both.

It should be noted that, as illustratively shown in Figure 6, the cooling indoor unit heat exchanger 121 serves as the evaporator, absorbing heat from the refrigerating room, alternatively, the cooling indoor unit heat exchanger 121 may also be out of operation.

In order to achieve the above embodiments, the present disclosure further provides in embodiments a defrosting control device for a multi-split system.

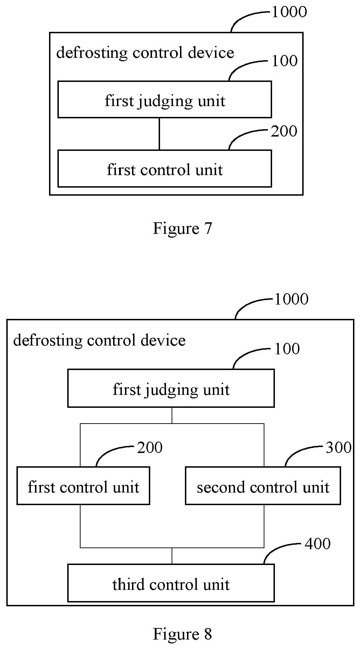

Figure 7 is a block diagram showing a defrosting control device for a multi-split system provided in embodiments of the present disclosure.

As shown in Figure 7, the defrosting control device 1000 comprises: a first judging unit 100 and a first control unit 200.

The first judging unit 100 is configured to judge whether a heat-absorbing and defrosting capacity of a cooling indoor unit in operation is greater than or equal to a preset value, in response to the multi-split system meeting a defrosting condition, where the multi-split system comprises at least one heating indoor unit, at least one cooling indoor unit, and at least one outdoor unit.

The first control unit 200 is configured to: in response to the heat-absorbing and defrosting capacity of the cooling indoor unit in operation being greater than or equal to the preset value, control an outdoor unit heat exchanger to switch from serving as an evaporator to a condenser; enable a refrigerant to recover heat absorbed by the cooling indoor unit; and provide the heat to the outdoor unit heat exchanger for defrosting and to a heating indoor unit heat exchanger for heating respectively.

In some embodiments, as shown in Figure 8, the defrosting control device 1000 further comprises: a second control unit 300.

The second control unit 300 is configured to: in response to the heat-absorbing and defrosting capacity of the cooling indoor unit in operation being lower than the preset value, control the outdoor unit heat exchanger to switch from serving as the evaporator to the condenser; control a heat storage electronic expansion valve to turn on; enable the refrigerant to absorb heat from a heat storage module; and provide the heat to the outdoor unit heat exchanger for defrosting and to the heating indoor unit heat exchanger for heat respectively.

In some embodiments, as shown in Figure 8, the defrosting control device 1000 further comprises: a third control unit 400.

After the multi-split system finishes defrosting, the third control unit 400 is configured to: control the outdoor unit heat exchanger to switch from serving as the condenser to the evaporator; absorb heat by the outdoor unit heat exchanger from outdoor environment and absorb heat by the cooling indoor unit in operation; and provide both the heat absorbed by the outdoor unit heat exchanger and the heat absorbed by the cooling indoor unit in operation to the heating indoor unit heat exchanger for heating.

With respect to the defrosting control device 1000 for the multi-split system in the above embodiments, specific implementations of the individual modules therein have been described in details in the method embodiments, which are not elaborated here.

The advantages achieved by the above defrosting control device 100 for the multi-split system are same as that achieved by the defrosting control method for the multi-split system in the above embodiments, which are not elaborated here.

According to embodiments of the present disclosure, the present disclosure further provides a multiple-split system, comprising the defrosting control device for the multi-split system in the above embodiments.

The advantages achieved by the above multiple-split system are same as that achieved by the defrosting control device for the multi-split system in the above embodiments, which are not elaborated here.

According to embodiments of the present disclosure, the present disclosure further provides a multi-split system.

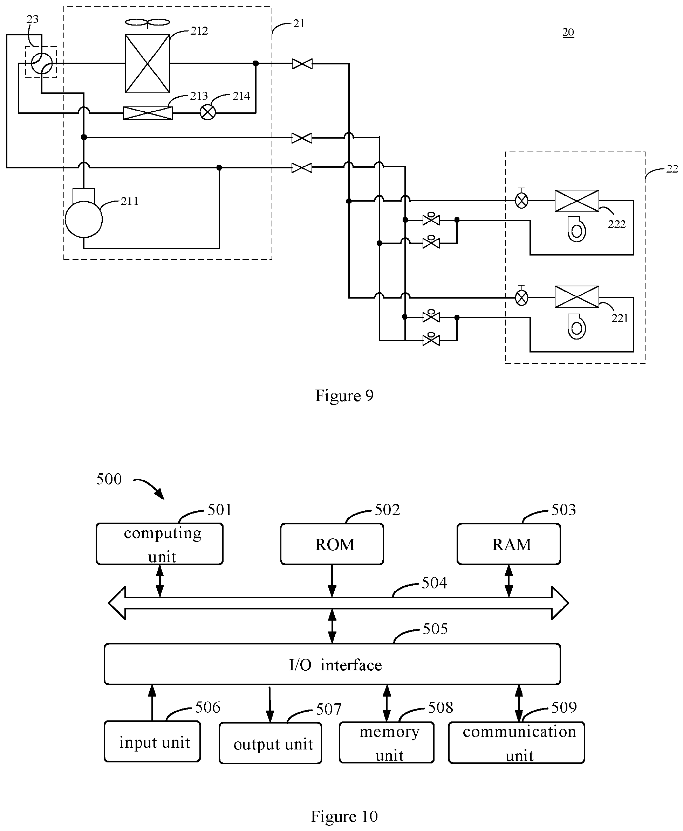

Figure 9 is a schematic diagram showing a multi-split system 20 provided in embodiments of the present disclosure.

As shown in Figure 9, the present disclosure provides in embodiments a multi-split system 20, comprising: the outdoor unit 21, and the indoor unit 22 connected to the outdoor unit 21; where the outdoor unit 21 comprises the compressor 211, and the outdoor unit heat exchanger 212; the indoor unit 22 comprises: at least one heating indoor unit heat exchanger 221 and at least one cooling indoor unit heat exchanger 222 connected in parallel.

A pipeline connecting the indoor unit 22 and the outdoor unit 21 is provided with a switching valve 23. The switching valve 23 is configured to: switch in response to the multi-split system 20 meeting the defrosting condition and the heat-absorbing and defrosting capacity of the cooling indoor unit heat exchanger 222 in operation being greater than or equal to the preset value; enable the outdoor unit heat exchanger 212 to switch to serve as the condenser; and recover heat absorbed by the cooling indoor unit heat exchanger 222 which serves as the evaporator for defrosting.

Refer to Figure 9 again, in some embodiments, the outdoor unit 21 further comprises: a heat storage module 213 connected to the outdoor unit heat exchanger 212; a pipeline connecting the outdoor unit heat exchanger 212 and the heat storage module 213 is provided with a valve 214; the valve 214 is configured to turn on, in the case that the heat-absorbing and defrosting capacity of the cooling indoor unit heat exchanger 222 in operation is lower than the preset value, and in the case that the outdoor unit heat exchanger 212 recovers insufficient heat for defrosting, which heat is absorbed by the cooling indoor unit heat exchanger 222 (severing as the evaporator) to enable the outdoor unit heat exchanger 212 to absorb heat for defrosting from the heat storage module 213 which has stored some heat in advance.

In some embodiments, the switching valve 23 is further configured to: switch again after the multi-split system 20 finishes defrosting; enable the outdoor unit heat exchanger 212 to switch from serving as the condenser to the evaporator, to absorb heat from outdoor environment; and provide the heat to the heating indoor unit heat exchanger 221 for heating.

In some embodiments, the valve 214 is further configured to turn off after the multi-split system 20 finishes defrosting; the valve 214 is further configured to turn on in response to the multi-split system 20 meeting a heat storage condition during normal operation, to enable the heat storage module 213 to store heat, where the heat storage condition comprises an environment temperature being lower than a critical temperature value and/or the cooling indoor unit having an insufficient heat-absorbing and defrosting capacity.

With respect to the multi-split system 20 in the above embodiments, specific implementations of the individual functional modules have been described in details in embodiments regarding the defrosting control method for the multi-split system, which are not elaborated here.

The advantages achieved by the above multi-split system 20 are same as that achieved by the defrosting control method for the multi-split system in the above embodiments, which are not elaborated here.

According to embodiments of the present disclosure, the present disclosure provides a computer device and a readable storage medium.

The computer device provided in embodiments of the present disclosure comprises: at least one processor, and a memory communicated with the at least one processor, wherein the memory stores an instruction executable by the at least one processor, wherein the instruction when executed by the at least one processor achieves the above defrosting control method for the multi-split system.

The readable storage medium provided in embodiments of the present disclosure is a non-transient computer-readable storage medium having stored therein a computer instruction that, when executed by a processor, achieves the above defrosting control method for the multi-split system.

Figure 10 is a block diagram showing a computer device for use in implementing a defrosting control method for a multi-split system provided in embodiments of the present disclosure.

The computer device intends to represent various forms of digital computers, for example, a laptop, a desktop computer, a workstation, a personal digital assistant, a server, a blade server, a large computer, and other suitable computers. The computer device may also represent various forms of mobile devices, such as a personal digital processor, a cellular phone, a smartphone, a wearable device, and other similar computing devices. The components shown herein, their connections and relationships, as well as their functions are only examples and are not intended to limit the implementation of the present disclosure as described and/or required herein.

As shown in Figure 10, the device 500 comprising a computing unit 501 performs various appropriate actions and processes according to computer programs stored in a read only memory (ROM) 502, or loaded from a storage unit 508 into a random access memory (RAM) 503. In the RAM 503, various programs and data required for the operation of the device 500 can also be stored. The computing unit 501, the ROM 502, and the RAM 503 are connected to each other through a bus 504. An input/output (I/O) interface 505 is also connected to the bus 504.

Components in the device 500 are connected to the I/O interface 505, comprising: an input unit 606, such as a keyboard, a mouse, etc.; an output unit 507, such as various types of displays, speakers, etc.; a storage unit 508, such as a disk, an optical disk, etc.; and a communication unit 509, such as network cards, modems, wireless communication transceivers, and the like. The communication unit 509 allows the device 500 to exchange information/data with other devices through a computer network such as the Internet and/or various telecommunication networks.

The computing unit 501 may be various general and/or specialized processing components with processing and computing capabilities. Some examples of the computing unit 501 comprise but are not limited to central processing units (CPUs), graphics processing units (GPUs), various specialized artificial intelligence (AI) computing chips, various computing units running machine learning model algorithms, digital signal processors (DSPs), and any appropriate processors, controllers, microcontrollers, etc. The computing unit 501 performs various methods and processes described above, such as the defrosting control method.

For example, in some embodiments, the defrosting control method may be implemented as computer software programs that are tangibly embodied on a machine-readable medium, such as the storage unit 508. In some embodiments, part or all of the computer programs may be loaded into and/or installed on the device 500 via the ROM 502 and/or the communication unit 509. When a computer program is loaded into the RAM 503 and executed by the computing unit 501, one or more steps of the defrosting control method described above may be performed. Alternatively, in other embodiments, the computing unit 501 may be configured to perform the defrosting control method in any other suitable manner (e.g., by means of firmware).

The various implementations of the defrosting control method and device described above herein may be implemented in digital electronic circuit systems, integrated circuit systems, field programmable gate arrays (FPGAs), specialized integrated circuits (ASICs), specialized standard products (ASSPs), systems on chip (SOC), load programmable logic devices (CPLDs), computer hardware, firmware, software, and/or combinations of the foregoing. These various implementations may comprise: implementation in one or more computer programs, which can be executed and/or interpreted on a programmable system comprising at least one programmable processor, which may be a dedicated or general programmable processor that receives data and instructions from a storage system, at least one input device, and at least one output device, and transmits data and instructions to the storage system, the at least one input device, and the at least one output device.

Program code for implementing the defrosting control method of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow charts and/or block diagrams to be performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may comprise, but is not limited to, an electronic, magnetic, optical, electromagnetic, infrared, or semiconductor system, apparatus, or device, or any suitable combination of the foregoing. More specific examples of machine-readable storage media comprise electrical connections based on one or more wires, portable computer disks, hard disks, random access memories (RAM), read-only memories (ROM), erasable programmable read-only memories (EPROM or flash memory), fiber optics, portable compact disc read-only memories (CD-ROM), optical storage devices, magnetic storage devices, or any suitable combination of the foregoing.

In order to provide interaction with users, the defrosting control method and device described herein can be implemented on a computer, which has a display device (such as a cathode ray tube (CRT) or liquid crystal display (LCD) monitor) for displaying information to users; and a keyboard and a pointing device (such as a mouse or a trackball), through which users can provide input to the computer. Other types of devices can also be used to provide interaction with users. For example, feedback provided to users can be any form of sensory feedback (such as visual feedback, auditory feedback, or tactile feedback); and input from users may be received in any form (comprising sound input, voice input, or tactile input).

The defrosting control method and device described herein can be implemented in a computing system that comprises backend components (such as serving as a data server), or in a computing system that comprises middleware components (such as an application server), or in a computing system that comprises front-end components (such as a user computer with a graphical user interface or web browser through which users can interact with the implementation of the defrosting control method and device described herein), or in a computing system that comprises any combination of such back-end components, middleware components, and front-end components. The components of the system can be interconnected through any form or medium of digital data communication (such as communication networks). Examples of communication networks comprise local area networks (LANs), wide area networks (WANs), internet, and blockchain networks.

A computer system may comprise both clients and servers. The client and server are generally far away from each other and typically interact through communication networks. The client and server are run on respective computers and are provided with respective computer programs in client-server correspondence each other, thus generating a client-server relationship. A server can be a cloud server, also known as a cloud computing server or cloud host, which is a host product in the cloud computing service system to solve the shortcomings of great management difficulty and weak business scalability in traditional physical hosts and Virtual Private Server (VPS) services. The server may also be a distributed system server or a server that combines blockchain.

Unless otherwise required in the context, the terms "comprise", "comprising", "comprises", and "comprising" are interpreted as inclusive meanings in the open-style language throughout the entire specification, which means "comprising/comprising, but not limited to". In the description of the present disclosure, the terms "some embodiments", "illustrative embodiments", "examples", and the like are intended to indicate that specific features, structures, materials, or characteristics related to the embodiment or example are comprised in at least one embodiment or example of the present disclosure. The schematic representation of the above terms may not necessarily refer to the same embodiment or example. In addition, the specific features, structures, materials, or characteristics may be comprised in any one or more embodiments or examples in any appropriate manner.

Unless otherwise specified, "a plurality of" means two or more than two. Terms such as "first" and "second" are used for purposes of description and cannot be understood to indicate or imply relative importance or significance or impliedly indicate quantity of the technical feature referred to. Thus, the feature defined with "first" and "second" may explicitly or implicitly comprise one or more this features.

The use of the phrase "(used) for" herein means the open-style and inclusive language, which does not exclude devices that are applicable or configured to perform additional tasks or steps.

In addition, the use of "based on" and "in response to" implies openness and inclusiveness, as processes, steps, computing, or other actions "based on" or "in response to" one or more of the conditions or values can be "based on" and "in response to" additional conditions or exceeding values in practice.

## Claims

1. A defrosting control method for a multi-split system (10), wherein the method comprises:
(S1) judging whether a heat-absorbing and defrosting capacity of a cooling indoor unit (12) in operation is greater than or equal to a preset value, in response to the multi-split system (10) meeting a defrosting condition, wherein the multi-split system (10) comprises at least a heating indoor unit (11), at least a cooling indoor unit (12), and at least an outdoor unit (13); and
(S2) in response to the heat-absorbing and defrosting capacity of the cooling indoor unit (12) in operation being greater than or equal to the preset value, controlling an outdoor unit heat exchanger (131) to switch from serving as an evaporator to a condenser, enabling a refrigerant to recover a heat absorbed by the cooling indoor unit (12); and providing the heat to the outdoor unit heat exchanger (131) to defrost and to a heating indoor unit heat exchanger (111) to heat respectively,
**characterized in that** the method further comprises
in response to the heat-absorbing and defrosting capacity of the cooling indoor unit (12) in operation being lower than the preset value,
controlling the outdoor unit heat exchanger (131) to switch from serving as the evaporator to the condenser;
controlling a heat storage electronic expansion valve (15) to turn on;
enabling the refrigerant to absorb a heat from a heat storage module (14) which has stored heat in advance; and
providing the heat to the outdoor unit heat exchanger (131) to defrost and to the heating indoor unit heat exchanger (111) to heat respectively¹.

2. The method according to claim 1, wherein after the multi-split system (10) finishes defrosting, the method further comprises:
controlling the outdoor unit heat exchanger (131) to switch from serving as the condenser to the evaporator;
absorbing a heat by the outdoor unit heat exchanger (131) from outdoor environment, and absorbing a heat by the cooling indoor unit (12) in operation; and
providing both the heat absorbed by the outdoor unit heat exchanger (131) and the heat absorbed by the cooling indoor unit (12) in operation to the heating indoor unit heat exchanger (111) to heat.

3. The method according to claim 1, further comprising:
controlling the heat storage electronic expansion valve (15) to turn off after the multi-split system (10) finishes defrosting; and
enabling the refrigerant to stop absorbing the heat from the heat storage module (14).

4. The method according to claim 1, further comprising:
controlling the heat storage module (14) to store a heat in response to the multi-split system (10) meeting a heat storage condition during a normal operation,
wherein the heat storage condition comprises: an environment temperature being lower than a critical temperature value and/or the cooling indoor unit (12) having an insufficient heat-absorbing and defrosting capacity.

5. A defrosting control device (1000) for a multi-split system (10), wherein the defrosting control device (1000) comprises:
a first judging unit (100), configured to: judge whether a heat-absorbing and defrosting capacity of a cooling indoor unit (12) in operation is greater than or equal to a preset value, in response to the multi-split system (10) meeting a defrosting condition, wherein the multi-split system (10) comprises at least a heating indoor unit (11), at least a cooling indoor unit (12), and at least an outdoor unit (13); and
a first control unit (200), configured to: in response to the heat-absorbing and defrosting capacity of the cooling indoor unit (12) in operation being greater than or equal to the preset value, control an outdoor unit heat exchanger (131) to switch from serving as an evaporator to a condenser; enable a refrigerant to recover a heat absorbed by the cooling indoor unit (12); and provide the heat to the outdoor unit heat exchanger (131) to defrost and to a heating indoor unit heat exchanger (111) to heat respectively,
**characterized in that** the defrosting control device (1000) further comprises
a second control unit (300), configured to: in response to the heat-absorbing and defrosting capacity of the cooling indoor unit (12) in operation being lower than the preset value,
control the outdoor unit heat exchanger (131) to switch from serving as the evaporator to the condenser;
control a heat storage electronic expansion valve (15) to turn on;
enable the refrigerant to absorb a heat from a heat storage module (14); and
provide the heat to the outdoor unit heat exchanger (131) to defrost and to the heating indoor unit heat exchanger (111) to heat respectively.

6. A multi-split system (10), comprising a defrosting control device (1000) for a multi-split system (10) according to claim 5.

7. The multi-split system of claim 6, further comprising: an outdoor unit (13), and an indoor unit connected to the outdoor unit (13), wherein
the outdoor unit (13) comprises a compressor, and an outdoor unit heat exchanger (131);
the indoor unit comprises at least a heating indoor unit heat exchanger (111) and at least a cooling indoor unit heat exchanger (121) connected in parallel;
a pipeline connecting the indoor unit and the outdoor unit (13) is provided with a switching valve (23),
wherein the defrosting control device (1000) is configured to control the switching valve to:
switch in response to the multi-split system (10) meeting a defrosting condition and a heat-absorbing and defrosting capacity of the cooling indoor unit (12) in operation being greater than or equal to a preset value;
enabling the outdoor unit heat exchanger (131) to switch to serve as a condenser, and recovering a heat to defrost, wherein the heat is absorbed by the cooling indoor unit heat exchanger (121) which serves as an evaporator
and wherein the outdoor unit (13) further comprises:
a heat storage module (14) connected to the outdoor unit heat exchanger (131),
wherein a pipeline connecting the outdoor unit heat exchanger (131) and the heat storage module (14) is provided with a valve,
wherein the valve:
turns on in response to a heat-absorbing and defrosting capacity of the cooling indoor unit heat exchanger (121) in operation being lower than a preset value;
enabling the outdoor unit heat exchanger (131) to absorb a heat to defrost, wherein the heat is absorbed from the heat storage module (14) which has stored heat in advance.

8. The system according to claim 7, wherein the switching valve further:
switches again after the multi-split system (10) finishes defrosting;
enabling the outdoor unit heat exchanger (131) to switch from serving as the condenser to the evaporator, to absorb a heat from outdoor environment; and
providing the heat to the heating indoor unit heat exchanger (111) to heat.

9. The system according to claim 8,
wherein the valve further turns off after the multi-split system (10) finishes defrosting,
wherein the valve further: turns on in response to the multi-split system (10) meeting a heat storage condition during a normal operation; enabling the heat storage module (14) to store a heat,
wherein the heat storage condition comprises an environment temperature being lower than a critical temperature value and/or the cooling indoor unit (12) having an insufficient heat-absorbing and defrosting capacity.

10. A computer device (500) for use in a defrosting control device (1000), comprising:
at least a processor; and
a memory communicated with the at least one processor,
wherein the memory stores an instruction executable by the at least one processor, wherein the instruction when executed by the at least one processor achieves a defrosting control method for a multi-split system (10) according to any one of claims 1 to 4.

11. A computer-readable storage medium having stored therein a computer program that when executed by a processor in a defrosting control device (1000), achieves a defrosting control method for a multi-split system (10) according to any one of claims 1 to 4.

## Patentansprüche

1. Abtausteuerverfahren für ein Multi-Split-System (10), wobei das Verfahren Folgendes umfasst:
(S1) Beurteilen, ob eine Wärmeaufnahme- und Abtauleistung einer in Betrieb befindlichen Kühl-Inneneinheit (12) größer oder gleich einem voreingestellten Wert ist, als Reaktion darauf, dass das Multi-Split-System (10) eine Abtaubedingung erfüllt, wobei das Multi-Split-System (10) mindestens eine Heiz-Inneneinheit (11), mindestens eine Kühl-Inneneinheit (12) und mindestens eine Außeneinheit (13) umfasst; und
(S2) als Reaktion darauf, dass die Wärmeaufnahme- und Abtauleistung der in Betrieb befindlichen Kühl-Inneneinheit (12) größer oder gleich dem voreingestellten Wert ist, Steuern eines Außeneinheit-Wärmetauschers (131), so dass dieser von einer Funktion als Verdampfer auf eine Funktion als Kondensator umschaltet, wodurch ein Kältemittel eine von der Kühl-Inneneinheit (12) aufgenommene Wärme zurückgewinnen kann; und die Wärme dem Außeneinheit-Wärmetauscher (131) zum Abtauen bzw. einem Heiz-Inneneinheit-Wärmetauscher (111) zum Heizen zuführt,
**dadurch gekennzeichnet, dass** das Verfahren ferner Folgendes umfasst:
als Reaktion darauf, dass die Wärmeaufnahme- und Abtauleistung der in Betrieb befindlichen Kühl-Inneneinheit (12) unter dem voreingestellten Wert liegt,
Steuern des Außeneinheit-Wärmetauschers (131), so dass er von der Funktion als Verdampfer auf die Funktion als Kondensator umschaltet;
Steuern eines elektronischen Wärmespeicher-Expansionsventils (15), so dass es sich einschaltet;
Ermöglichen, dass das Kältemittel eine Wärme aus einem Wärmespeichermodul (14) aufnimmt, das zuvor Wärme gespeichert hat; und
Zuführen der Wärme an den Außeneinheit-Wärmetauscher (131) zum Abtauen bzw. dem Heiz-Inneneinheit-Wärmetauscher (111) zum Heizen.

2. Verfahren gemäß Anspruch 1, wobei das Verfahren, nachdem das Multi-Split-System (10) das Abtauen beendet hat, ferner Folgendes umfasst:
Steuern des Außeneinheit-Wärmetauschers (131), so dass dieser von der Funktion als Kondensator auf die Funktion als Verdampfer umschaltet;
Aufnehmen einer Wärme durch den Außeneinheit-Wärmetauscher (131) aus einer Außenumgebung und Aufnehmen einer Wärme durch die im Betrieb befindliche Kühl-Inneneinheit (12); und
Bereitstellen sowohl der vom Außeneinheit-Wärmetauscher (131) aufgenommenen Wärme als auch der von der im Betrieb befindlichen Kühl-Inneneinheit (12) aufgenommenen Wärme an den Heiz-Inneneinheit-Wärmetauscher (111) zum Heizen.

3. Verfahren gemäß Anspruch 1, ferner umfassend:
Steuern des elektronischen Wärmespeicher-Expansionsventils (15), so dass es sich abschaltet, nachdem das Multi-Split-System (10) den Abtauvorgang beendet hat; und
Ermöglichen, dass das Kältemittel die Wärmeaufnahme aus dem Wärmespeichermodul (14) einstellt.

4. Verfahren gemäß Anspruch 1, ferner umfassend:
Steuern des Wärmespeichermoduls (14), so dass es eine Wärme speichert, als Reaktion darauf, dass das Multi-Split-System (10) während eines Normalbetriebs eine Wärmespeicherbedingung erfüllt,
wobei die Wärmespeicherbedingung Folgendes umfasst: eine Umgebungstemperatur, die niedriger als ein kritischer Temperaturwert ist, und/oder die Kühl-Inneneinheit (12) aufweisend eine unzureichende Wärmeaufnahme- und Abtauleistung.

5. Abtausteuervorrichtung (1000) für ein Multi-Split-System (10), wobei die Abtausteuervorrichtung (1000) Folgendes umfasst:
eine erste Beurteilungseinheit (100), die so konfiguriert ist, dass sie: beurteilt, ob eine Wärmeaufnahme- und Abtauleistung einer in Betrieb befindlichen Kühl-Inneneinheit (12) größer oder gleich einem voreingestellten Wert ist, als Reaktion darauf, dass das Multi-Split-System (10) eine Abtaubedingung erfüllt, wobei das Multi-Split-System (10) mindestens eine Heiz-Inneneinheit (11), mindestens eine Kühl-Inneneinheit (12) und mindestens eine Außeneinheit (13) umfasst; und
eine erste Steuereinheit (200), die so konfiguriert ist, dass sie: als Reaktion darauf, dass die Wärmeaufnahme- und Abtauleistung der in Betrieb befindlichen Kühl-Inneneinheit (12) größer oder gleich dem voreingestellten Wert ist, einen Außeneinheit-Wärmetauscher (131) so steuert, dass er von einer Funktion als Verdampfer auf eine Funktion als Kondensator umschaltet; es einem Kältemittel ermöglicht, die von der Kühl-Inneneinheit (12) aufgenommene Wärme zurückzugewinnen; und die Wärme dem Außeneinheit-Wärmetauscher (131) zum Abtauen bzw. einem Heiz-Inneneinheit-Wärmetauscher (111) der Heiz-Inneneinheit zum Heizen zuzuführen,
**dadurch gekennzeichnet, dass** die Abtausteuervorrichtung (1000) ferner Folgendes umfasst
eine zweite Steuereinheit (300), die so konfiguriert ist, dass sie: als Reaktion darauf, dass die Wärmeaufnahme- und Abtauleistung der im Betrieb befindlichen Kühl-Inneneinheit (12) unter dem voreingestellten Wert liegt,
den Außeneinheit-Wärmetauscher (131) so zu steuern, dass er von der Funktion als Verdampfer auf die Funktion als Kondensator umschaltet;
ein elektronisches Wärmespeicher-Expansionsventil (15) so zu steuern, dass es sich einschaltet;
es dem Kältemittel zu ermöglichen, Wärme aus einem Wärmespeichermodul (14) aufzunehmen; und
die Wärme dem Außeneinheit-Wärmetauscher (131) zum Abtauen bzw. dem Heiz-Inneneinheit-Wärmetauscher (111) der Heiz-Inneneinheit zum Heizen zuzuführen.

6. Multi-Split-System (10), umfassend eine Abtausteuervorrichtung (1000) für ein Multi-Split-System (10) gemäß Anspruch 5.

7. Multi-Split-System gemäß Anspruch 6, ferner umfassend: eine Außeneinheit (13) und eine mit der Außeneinheit (13) verbundene Inneneinheit, wobei
die Außeneinheit (13) einen Kompressor und einen Außeneinheit-Wärmetauscher (131) umfasst;
die Inneneinheit mindestens einen Heiz-Inneneinheit-Wärmetauscher (111) und mindestens einen Kühl-Inneneinheit-Wärmetauscher (121) umfasst, die parallel geschaltet sind;
eine Rohrleitung, die die Inneneinheit und die Außeneinheit (13) verbindet, mit einem Umschaltventil (23) versehen ist,
wobei die Abtausteuervorrichtung so konfiguriert ist, dass sie das Umschaltventil so steuert, dass es:
als Reaktion darauf, dass das Multi-Split-System (10) eine Abtaubedingung erfüllt und eine Wärmeaufnahme- und Abtauleistung der im Betrieb befindlichen Kühl-Inneneinheit (12) größer oder gleich einem voreingestellten Wert ist, umschaltet;
es dem Außeneinheit-Wärmetauscher (131) ermöglicht, umzuschalten, so dass er als Kondensator dient, und Wärme zum Abtauen zurückzugewinnen, wobei die Wärme vom Kühl-Inneneinheit-Wärmetauscher (121) aufgenommen wird, der als Verdampfer dient
und wobei die Außeneinheit (13) ferner Folgendes umfasst:
ein Wärmespeichermodul (14), das mit dem Außeneinheit-Wärmetauscher (131) verbunden ist,
wobei eine Rohrleitung, die den Außeneinheit-Wärmetauscher (131) und das Wärmespeichermodul (14) verbindet, mit einem Ventil versehen ist, wobei das Ventil:
sich öffnet, als Reaktion darauf, dass die Wärmeaufnahme- und Abtauleistung des im Betrieb befindlichen Kühl-Inneneinheit-Wärmetauschers (121) unter einem voreingestellten Wert liegt;
es dem Außeneinheit-Wärmetauscher (131) ermöglicht, Wärme zum Abtauen aufzunehmen, wobei die Wärme von dem Wärmespeichermodul (14) aufgenommen wird, das zuvor Wärme gespeichert hat.

8. System gemäß Anspruch 7, wobei das Umschaltventil ferner:
nach Beendigung des Abtauvorgangs des Multi-Split-Systems (10) erneut umschaltet;
es dem Außeneinheit-Wärmetauscher (131) ermöglicht, von der Funktion als Kondensator auf die Funktion als Verdampfer umzuschalten, um eine Wärme aus der Außenumgebung aufzunehmen; und
die Wärme dem Heiz-Inneneinheit-Wärmetauscher (111) zum Heizen zuzuführen.

9. System gemäß Anspruch 8,
wobei sich das Ventil ferner ausschaltet, nachdem das Multi-Split-System (10) den Abtauvorgang beendet hat,
wobei das Ventil ferner: sich einschaltet, als Reaktion darauf, dass das Multi-Split-System (10) während eines Normalbetriebs eine Wärmespeicherbedingung erfüllt; wodurch es dem Wärmespeichermodul (14) ermöglicht wird, Wärme zu speichern,
wobei die Wärmespeicherbedingung umfasst, dass eine Umgebungstemperatur unter einem kritischen Temperaturwert liegt und/oder dass die Kühl-Inneneinheit (12) eine unzureichende Wärmeaufnahme- und Abtauleistung aufweist.

10. Computervorrichtung (500) zur Verwendung in einer Abtausteuervorrichtung (1000), umfassend:
mindestens einen Prozessor; und
einen Speicher, der mit dem mindestens einen Prozessor verbunden ist,
wobei der Speicher einen Befehl speichert, der von dem mindestens einen Prozessor ausführbar ist, wobei der Befehl, wenn er von dem mindestens einen Prozessor ausgeführt wird, ein Abtausteuerverfahren für ein Multi-Split-System (10) gemäß einem der Ansprüche 1 bis 4 realisiert.

11. Computerlesbares Speichermedium aufweisend ein darauf gespeichertes Computerprogramm, das, wenn es von einem Prozessor in einer Abtausteuervorrichtung (1000) ausgeführt wird, ein Abtausteuerverfahren für ein Multi-Split-System (10) gemäß einem der Ansprüche 1 bis 4 realisiert.

## Revendications

1. Procédé de commande de dégivrage pour un système multi-split (10), dans lequel le procédé comprend :
(S1) déterminer si une capacité d'absorption de chaleur et de dégivrage d'une unité intérieure de refroidissement (12) en fonctionnement est supérieure ou égale à une valeur prédéfinie, en réponse au fait que le système multi-split (10) satisfait à une condition de dégivrage, dans lequel le système multi-split (10) comprend au moins une unité intérieure de chauffage (11), au moins une unité intérieure de refroidissement (12), et au moins une unité extérieure (13) ; et
(S2) en réponse au fait que la capacité d'absorption de chaleur et de dégivrage de l'unité intérieure de refroidissement (12) en fonctionnement est supérieure ou égale à la valeur prédéfinie, commander un échangeur de chaleur d'unité extérieure (131) pour qu'il passe d'un fonctionnement en tant qu'évaporateur à un fonctionnement en tant que condenseur, permettre à un fluide frigorigène de récupérer de la chaleur absorbée par l'unité intérieure de refroidissement (12) ;
et fournir la chaleur à l'échangeur de chaleur d'unité extérieure (131) pour le dégivrage et à un échangeur de chaleur d'unité intérieure de chauffage (111) pour le chauffage, respectivement,
**caractérisé en ce que** le procédé comprend en outre :
en réponse au fait que la capacité d'absorption de chaleur et de dégivrage de l'unité intérieure de refroidissement (12) en fonctionnement est inférieure à la valeur prédéfinie,
commander l'échangeur de chaleur d'unité extérieure (131) pour qu'il passe d'un fonctionnement en tant qu'évaporateur à un fonctionnement en tant que condenseur ;
commander une vanne de détente électronique de stockage de chaleur (15) pour qu'elle s'ouvre ;
permettre au fluide frigorigène d'absorber de la chaleur provenant d'un module de stockage de chaleur (14) qui a préalablement stocké de la chaleur ; et
fournir la chaleur à l'échangeur de chaleur d'unité extérieure (131) pour le dégivrage et à l'échangeur de chaleur d'unité intérieure de chauffage (111) pour le chauffage, respectivement.

2. Procédé selon la revendication 1, dans lequel, après que le système multi-split (10) a terminé le dégivrage, le procédé comprend en outre :
commander l'échangeur de chaleur d'unité extérieure (131) pour qu'il passe d'un fonctionnement en tant que condenseur à un fonctionnement en tant qu'évaporateur ;
absorber de la chaleur provenant de l'environnement extérieur au moyen de l'échangeur de chaleur d'unité extérieure (131), et absorber de la chaleur au moyen de l'unité intérieure de refroidissement (12) en fonctionnement ; et
fournir à la fois la chaleur absorbée par l'échangeur de chaleur d'unité extérieure (131) et la chaleur absorbée par l'unité intérieure de refroidissement (12) en fonctionnement à l'échangeur de chaleur d'unité intérieure de chauffage (111) pour le chauffage.

3. Procédé selon la revendication 1, comprenant en outre :
commander la vanne de détente électronique de stockage de chaleur (15) pour qu'elle se ferme après que le système multi-split (10) a terminé le dégivrage ; et
permettre au fluide frigorigène de cesser d'absorber la chaleur provenant du module de stockage de chaleur (14).

4. Procédé selon la revendication 1, comprenant en outre :
commander le module de stockage de chaleur (14) pour qu'il stocke de la chaleur en réponse au fait que le système multi-split (10) satisfait à une condition de stockage de chaleur au cours d'un fonctionnement normal,
dans lequel la condition de stockage de chaleur comprend : le fait qu'une température de l'environnement soit inférieure à une valeur de température critique et/ou que l'unité intérieure de refroidissement (12) ait une capacité d'absorption de chaleur et de dégivrage insuffisante.

5. Dispositif de commande de dégivrage (1000) pour un système multi-split (10), dans lequel le dispositif de commande de dégivrage (1000) comprend :
une première unité de détermination (100), configurée pour : déterminer si une capacité d'absorption de chaleur et de dégivrage d'une unité intérieure de refroidissement (12) en fonctionnement est supérieure ou égale à une valeur prédéfinie, en réponse au fait que le système multi-split (10) satisfait à une condition de dégivrage, dans lequel le système multi-split (10) comprend au moins une unité intérieure de chauffage (11), au moins une unité intérieure de refroidissement (12), et au moins une unité extérieure (13) ; et
une première unité de commande (200), configurée pour : en réponse au fait que la capacité d'absorption de chaleur et de dégivrage de l'unité intérieure de refroidissement (12) en fonctionnement est supérieure ou égale à la valeur prédéfinie, commander un échangeur de chaleur d'unité extérieure (131) pour qu'il passe d'un fonctionnement en tant qu'évaporateur à un fonctionnement en tant que condenseur ; permettre à un fluide frigorigène de récupérer de la chaleur absorbée par l'unité intérieure de refroidissement (12) ; et fournir la chaleur à l'échangeur de chaleur d'unité extérieure (131) pour le dégivrage et à un échangeur de chaleur d'unité intérieure de chauffage (111) pour le chauffage, respectivement,
**caractérisé en ce que** le dispositif de commande de dégivrage (1000) comprend en outre
une deuxième unité de commande (300), configurée pour : en réponse au fait que la capacité d'absorption de chaleur et de dégivrage de l'unité intérieure de refroidissement (12) en fonctionnement est inférieure à la valeur prédéfinie,
commander l'échangeur de chaleur d'unité extérieure (131) pour qu'il passe d'un fonctionnement en tant qu'évaporateur à un fonctionnement en tant que condenseur ;
commander une vanne de détente électronique de stockage de chaleur (15) pour qu'elle s'ouvre ;
permettre au fluide frigorigène d'absorber de la chaleur provenant d'un module de stockage de chaleur (14) ; et
fournir la chaleur à l'échangeur de chaleur d'unité extérieure (131) pour le dégivrage et à l'échangeur de chaleur d'unité intérieure de chauffage (111) pour le chauffage, respectivement.

6. Système multi-split (10), comprenant un dispositif de commande de dégivrage (1000) pour un système multi-split (10) selon la revendication 5.

7. Système multi-split selon la revendication 6, comprenant en outre : une unité extérieure (13), et une unité intérieure raccordée à l'unité extérieure (13), dans lequel
l'unité extérieure (13) comprend un compresseur, et un échangeur de chaleur d'unité extérieure (131) ;
l'unité intérieure comprend au moins un échangeur de chaleur d'unité intérieure de chauffage (111) et au moins un échangeur de chaleur d'unité intérieure de refroidissement (121) raccordés en parallèle ;
une canalisation reliant l'unité intérieure et l'unité extérieure (13) est pourvue d'une vanne de commutation (23),
dans lequel le dispositif de commande de dégivrage (1000) est configuré pour commander la vanne de commutation de manière à :
commuter en réponse au fait que le système multi-split (10) satisfait à une condition de dégivrage et qu'une capacité d'absorption de chaleur et de dégivrage de l'unité intérieure de refroidissement (12) en fonctionnement est supérieure ou égale à une valeur prédéfinie ;
permettre à l'échangeur de chaleur d'unité extérieure (131) de passer à un fonctionnement en tant que condenseur, et récupérer de la chaleur pour le dégivrage, dans lequel la chaleur est absorbée par l'échangeur de chaleur d'unité intérieure de refroidissement (121) qui fonctionne en tant qu'évaporateur et dans lequel l'unité extérieure (13) comprend en outre :
un module de stockage de chaleur (14) raccordé à l'échangeur de chaleur d'unité extérieure (131),
dans lequel une canalisation reliant l'échangeur de chaleur d'unité extérieure (131) et le module de stockage de chaleur (14) est pourvue d'une vanne, dans lequel la vanne :
s'ouvre en réponse au fait qu'une capacité d'absorption de chaleur et de dégivrage de l'échangeur de chaleur d'unité intérieure de refroidissement (121) en fonctionnement est inférieure à une valeur prédéfinie ;
permet à l'échangeur de chaleur d'unité extérieure (131) d'absorber de la chaleur pour le dégivrage, dans lequel la chaleur est absorbée à partir du module de stockage de chaleur (14) qui a préalablement stocké de la chaleur.

8. Système selon la revendication 7, dans lequel la vanne de commutation, en outre :
commute à nouveau après que le système multi-split (10) a terminé le dégivrage ;
permet à l'échangeur de chaleur d'unité extérieure (131) de passer d'un fonctionnement en tant que condenseur à un fonctionnement en tant qu'évaporateur, pour absorber de la chaleur provenant de l'environnement extérieur ; et
fournit la chaleur à l'échangeur de chaleur d'unité intérieure de chauffage (111) pour le chauffage.

9. Système selon la revendication 8,
dans lequel la vanne se ferme en outre après que le système multi-split (10) a terminé le dégivrage,
dans lequel la vanne, en outre : s'ouvre en réponse au fait que le système multi-split (10) satisfait à une condition de stockage de chaleur au cours d'un fonctionnement normal ; permet au module de stockage de chaleur (14) de stocker de la chaleur,
dans lequel la condition de stockage de chaleur comprend le fait qu'une température de l'environnement soit inférieure à une valeur de température critique et/ou que l'unité intérieure de refroidissement (12) ait une capacité d'absorption de chaleur et de dégivrage insuffisante.

10. Dispositif informatique (500) destiné à être utilisé dans un dispositif de commande de dégivrage (1000), comprenant :
au moins un processeur ; et
une mémoire en communication avec ledit au moins un processeur,
dans lequel la mémoire stocke une instruction exécutable par ledit au moins un processeur, dans lequel l'instruction, lorsqu'elle est exécutée par ledit au moins un processeur, met en œuvre un procédé de commande de dégivrage pour un système multi-split (10) selon l'une quelconque des revendications 1 à 4.

11. Support de stockage lisible par ordinateur dans lequel est stocké un programme informatique qui, lorsqu'il est exécuté par un processeur dans un dispositif de commande de dégivrage (1000), met en œuvre un procédé de commande de dégivrage pour un système multi-split (10) selon l'une quelconque des revendications 1 à 4.
